# EUROPEAN PATENT SPECIFICATION

(11) **EP 3 447 383 B1**
(45) Date of publication and mention of the grant of the patent: **10.05.2023**
(21) Application number: 18190256.0
(22) Date of filing: 22.08.2018
(51) Int. Cl.: F23R 3/00

(54) **HYBRID FLOATWALL COOLING FEATURE**
HYBRIDES - GLEITWAND - KÜHLMERKMAL
ÉLÉMENT DE REFROIDISSEMENT HYBRIDE DE PAROI FLOTTANTE

(30) Priority: 22.08.2017 US 201715682887
(43) Date of publication of application: 27.02.2019
(73) Proprietor: Raytheon Technologies Corporation, Farmington, CT 06032 (US)
(72) Inventor: CHEUNG, Albert K., East Hampton, CT Connecticut 06424 (US)
(74) Representative: Dehns

(56) References cited:
- EP-A1- 3 009 744
- US-A1- 2016 025 342
- US-A1- 2016 040 879
- US-A1- 2016 313 005
- US-A1- 2016 377 289

## Description

### BACKGROUND

The present disclosure is directed a turbine engine combustor and, more particularly, to a turbine engine combustor wall with a local feature providing more material enabling more complex cooling passages to improve cooling effectiveness and to prevent hot spot propagation.

A turbine engine can include a fan, a compressor, a combustor, and a turbine. The combustor can include an annular bulkhead extending radially between an upstream end of a radial inner combustor wall and an upstream end of a radial outer combustor wall. The inner and the outer combustor walls can each include an impingement cavity extending radially between a support shell and a heat shield. The support shell can include a plurality of impingement apertures, which directs cooling air from a plenum surrounding the combustor into the impingement cavity and against an impingement cavity surface of the heat shield. The heat shield can include a plurality of effusion apertures, which directs the cooling air from the impingement cavity into the combustion chamber for film cooling a combustion chamber surface of the heat shield.

During operation, fuel provided by a plurality of combustor fuel injectors is mixed with compressed gas within the combustion chamber, and the mixture is ignited. Due to varying flow and combustion temperatures within the combustion chamber, the inner and outer combustor walls can be subject to axially and circumferentially varying combustion chamber gas temperatures. Such varying temperatures can cause significant temperature differentials with combustor walls, which can cause combustor wall material fatigue. Under certain conditions, debris, such as, dust, sand, volcanic ash, and siliceous foreign particles, can settle in certain locations on the impingement cavity surface of the combustor heat shield. The debris forms a glassy melt of calcium-magnesium aluminosilicate (CMAS) deposit that can interact with the heat shield and forms a boundary layer on the cavity surface. The deposit diminishes the heat transfer capacity of the heat shield in that hot spot location. Hot spots can form at locations along the walls that ultimately burn through the walls and diminish cooling effectiveness resulting in wall deterioration. Prior art combustor walls are known from US2016/313005A, EP3009744A, US2016040879A and US2016025342A.

### SUMMARY

The present invention provides a turbine engine combustor according to claim 1.

The present invention also provides a process according to claim 5.

Embodiments of the disclosure are set forth in the dependent claims.

Other details of the hybrid floatwall cooling features are set forth in the following detailed description and the accompanying drawings wherein like reference numerals depict like elements.

### BRIEF DESCRIPTION OF THE DRAWINGS

Fig. 1 is a side-sectional diagrammatic illustration of a turbine engine combustor.
FIG. 2 is a cross-sectional diagrammatic illustration of a turbine engine combustor.
FIG. 3 is an exploded, perspective diagrammatic illustration of an exemplary section of a combustor wall.
FIG. 4 is a diagrammatic illustration of an exemplary section of a combustor support shell.
FIG. 5 is a side-sectional diagrammatic illustration of an exemplary section of a combustor support shell.

### DETAILED DESCRIPTION

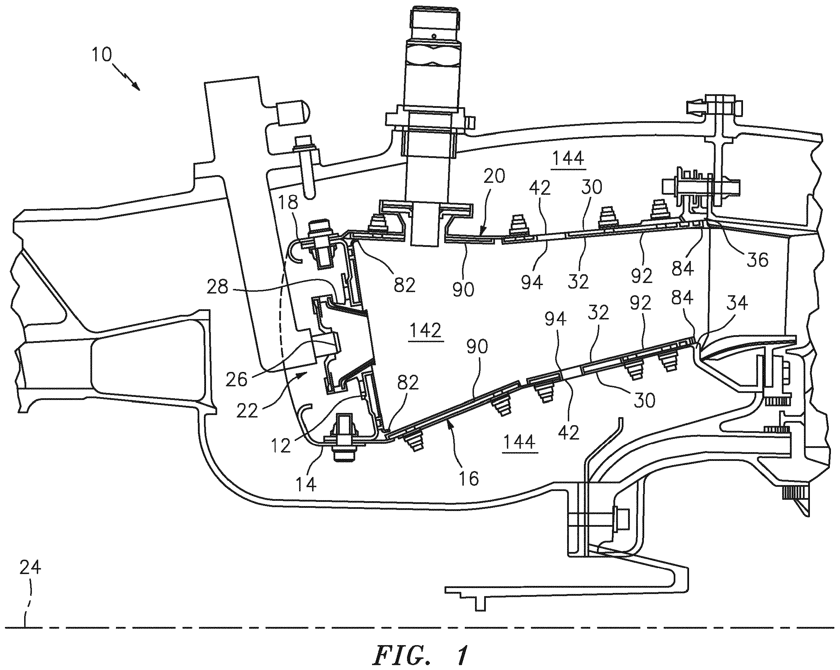

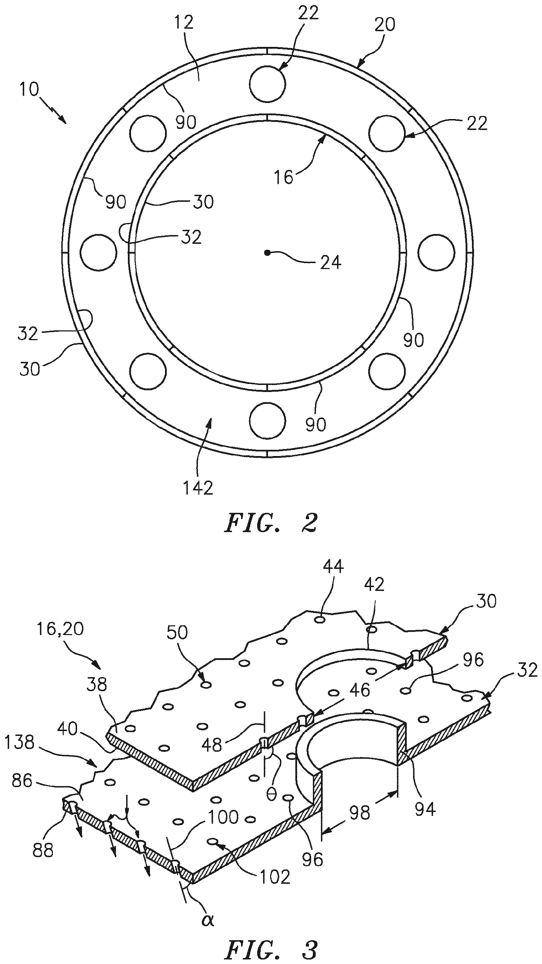

FIGS. 1 and 2 illustrate a combustor 10 (e.g., an axial flow combustor) for a turbine engine. The combustor 10 includes an annular combustor bulkhead 12 that extends radially between an upstream end 14 of a first (e.g., radial inner) combustor wall 16 and an upstream end 18 of a second (e.g., radial outer) combustor wall 20. The combustor 10 also includes a plurality of fuel injector assemblies 22 connected to the bulkhead 12, and arranged circumferentially around an axial centerline 24 of the engine. Each of the fuel injector assemblies 22 includes a fuel injector 26, which can be mated with a swirler 28.

The first combustor wall 16 and the second combustor wall 20 can each include a combustor support shell 30 and a combustor heat shield 32. The support shell 30 extends axially between the upstream end 14, 18 and a downstream end 34, 36. The support shell 30 extends circumferentially around the axial centerline 24, which provides the support shell 30 with an annular cross-sectional geometry. Referring to FIG. 3, the support shell 30 also extends radially between a combustor plenum surface 38 and a first impingement cavity surface 40. Referring again to FIGS. 1 and 2, the support shell 30 can be constructed as a single integral tubular body. Alternatively, the support shell 30 can be assembled from a plurality of circumferential support shell panels and/or a plurality of axial support shell panels.

Referring to FIG. 3, the support shell 30 includes a plurality of shell quench apertures 42 and a plurality of impingement apertures (e.g., the apertures 44). The shell quench apertures 42 extend radially through the support shell 30 between the combustor plenum surface 38 and the first impingement cavity surface 40. Each of the shell quench apertures 42 can have a circular cross-sectional geometry with a first diameter 46.

The impingement apertures (e.g., the apertures 44) extend radially through the support shell 30 between the combustor plenum surface 38 and the first impingement cavity surface 40. Each of the impingement apertures (e.g., the apertures 44) has an axis 48 that is angularly offset from first impingement cavity surface 40, for example, by an angle θ of about ninety degrees. Each of the impingement apertures (e.g., the apertures 44) can have a circular cross-sectional geometry with a second diameter 50, which is substantially (e.g., at least five to twenty times) smaller than the first diameter 46.

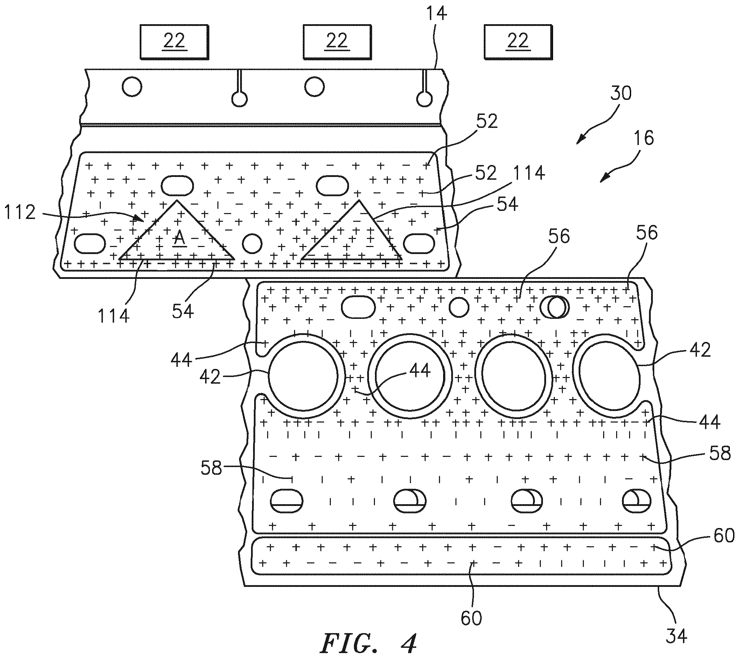

Referring to FIG. 4, the impingement apertures can include a plurality of first impingement apertures 52, a plurality of second impingement apertures 54, a plurality of third impingement apertures 56, a plurality of fourth impingement apertures 44, a plurality of fifth impingement apertures 58, and a plurality of sixth impingement apertures 60.

Referring again to FIGS. 1 and 2, the heat shield 32 extends axially between an upstream end 82 and a downstream end 84. The heat shield 32 extends circumferentially around the axial centerline 24, which provides the heat shield 32 with an annular cross-sectional geometry. Referring to FIG. 3, the heat shield 32 also extends radially between a second impingement cavity surface 86 and a combustion chamber surface 88. Referring again to FIGS. 1 and 2, the heat shield 32 can be assembled from a plurality of circumferential heat shield panels 90 and 92 and/or a plurality of axial heat shield panels 90 and 92. Alternatively, the heat shield 32 can be constructed as a single integral tubular body.

Referring to FIG. 3, the heat shield 32 includes a plurality of shield quench apertures 94 and a plurality of effusion apertures (e.g., the apertures 96). The shield quench apertures 94 extend radially through the heat shield 32 between the second impingement cavity surface 86 and the combustion chamber surface 88. Each of the shield quench apertures 94 can have a circular cross-sectional geometry with a third diameter 98. The third diameter 98 may be less than the first diameter 46 where, for example, the heat shield 32 includes annular flanges that nest within the shell quench apertures 42 and fluidly couple the shield quench apertures 94 to the shell quench apertures 42. Alternatively, the third diameter 98 may be greater than or equal to the first diameter 46.

The effusion apertures (e.g., the apertures 96) extend radially through the heat shield 32 between the second impingement cavity surface 86 and the combustion chamber surface 88. Each of the effusion apertures (e.g., the apertures 96) has an axis 100 that is angularly offset from the combustion chamber surface 88, for example, by an angle α of between about fifteen and about thirty degrees (e.g., about 25°). Each of the effusion apertures (e.g., the apertures 96) can have a circular cross-sectional geometry with a fourth diameter 102, which is substantially (e.g., at least five to twenty times) smaller than the third diameter 98. The fourth diameter 102 of some or all of the effusion apertures can be greater than, less than or equal to the second diameter 50.

Referring to FIG. 1, the support shell 30 of the first combustor wall 16 is located radially within the heat shield 32 of the first combustor wall 16. The heat shield 32 of the second combustor wall 20 is located radially within the support shell 30 of the second combustor wall 20. The heat shields 32 are respectively connected to the support shells 30 with a plurality of fasteners (e.g., heat shield studs and nuts). Each of the shell quench apertures 42 is fluidly coupled to a respective one of the shield quench apertures 94.

In some embodiments, for example as illustrated in FIG. 3, the impingement apertures 44 are offset from the effusion apertures 96. In this manner, the cooling air can impinge against and, thus, cool the second impingement cavity surface 86 before flowing into the effusion apertures 96.

Referring to FIG. 3, FIG. 4 and FIG. 5, an exemplary embodiment of a shaped pad 110 formed in a portion of the heat shield 32 is shown. The shaped pad 110 is an additional thickness to the heat shield 32 over a predetermined area A, at locations corresponding to hot spots 112. The shaped pad 110 can include an extension 118 from the impingement cavity surface 86 of the heat shield 32. The shaped pad 110 can be cast integrally along with the heat shield 32. The shaped pad 110 can be thick enough to have a dimension T that extends from the impingement cavity surface 86 through a cutout 114 formed through the support shell 30. In an exemplary embodiment, if a normal heat shield 32 has a thickness of about 0.035 inches (0.889 mm), the shaped pad 110 thickness can be about 0.095 inches (2.413 mm) thick. The cutout 114 can include a matching shape similar to the shaped pad 110 with a slightly larger dimension to allow the shaped pad 110 to pass through the support shell 30. The cutout 114 can be form-fit with the shaped pad 110. The heat shield 32 with the shaped pad 110 extending through the support shell 30 can form a hybrid double wall 116. The hybrid double wall 116 is a cross between a double wall system and a single wall system for combustors.

The hybrid double wall 116 includes a support shell 30 and heat shield 32 with an impingement cavity 138 between for cooling fluid to flow. The cooling fluid flows from the combustion plenum 144 through impingement apertures 44 of the support shell 30 into the impingement cavity 138. The cooling fluid 120 flows from the impingement cavity 138 through the effusion apertures 96 of the heat shield 32 into the combustion chamber 142. The hybrid double wall 116 also includes the shaped pad 110 formed in the heat shield 32. The shaped pad 110 includes effusion apertures 96 configured to flow cooling fluid from the combustor plenum 144 through the heat shield 32 and into the combustion chamber 142. In an exemplary embodiment, effusion apertures 96 can be provided in the shaped portion 110 and configured to flow cooling fluid 120 from the impingement cavity 138 through the heat shield 32 into the combustion chamber 142.

The hot spots 112 are locations on the heat shield susceptible to higher temperatures and subsequent loss of material due to thermal and chemical degradation. The hot spot 112 can be found downstream of the fuel injector assemblies 22. In an exemplary embodiment, the hot spots 112 can be located in-line with each other and about a half of a combustor dome height downstream of the fuel injector assemblies 22. The hot spot 112 in the heat shield 32 can lead to wall failure resulting in a blowout, that is, a larger hole or aperture 96 in the heat shield 32. The hole/larger aperture 96 changes the cooling flow characteristics in the hot spot 112 location. The changes in cooling flow characteristics can lead to less cooling and higher temperatures at the hot spot 112. The hot spot 112 can increase in size as the changes in cooling characteristics cascades into ever decreasing cooling capacity.

The shaped pad 110 comprising greater thickness and material at the location of the hot spot 112, allows for greater durability. The thermal and chemical degradation takes a longer period of time to create the initial wall failure.

The shaped pad 110 is depicted as a triangle shape but it is contemplated that any shape can be utilized, such as, triangle, trapezoid, rectangle and the like, depending on the hot spot 112 location. In an exemplary embodiment, if the shaped pad 110 is configured as a triangle, the height of the triangle can be about one quarter of a combustor dome height. In an exemplary embodiment, the location, size and shape of the shaped pad 110 can be determined by testing in the laboratory as well as through computer modeling. For example, a computer model can determine an estimate of the location, size and shape of the hot spot 112. Then, laboratory testing in a test rig can be performed to gain empirical data for location, size and shape of the hot spot 112.

The shaped pad 110 includes the effusion apertures 96 that conduct cooling fluid flow 120 across the heat shield 32. The effusion apertures 96 in the heat shield 32 and impingement apertures 44 in the support shell 30 can be configured to maintain the proper cooling flow proportions through the heat shield 32 and support shell 30. The pressure drop between the airflow through the impingement apertures 44 across the support wall 30 and the airflow through effusion apertures 96 across the heat shield 32 can be split and defined as a ratio. The pressure drop split can be 100 to 0 for cooling flow through the heat shield at the shaped pad 110. The pressure drop split can be 50/50 to 80/20 near other portions of the support shell 30 and heat shield 32 proximate the shaped pad 110.

Cooling air 120 flowing through the impingement apertures 44 in the support shell 30 is subject to a cooling air first pressure drop between the combustor plenum surface 38 and the first impingement cavity surface 40. The magnitude of the first pressure drop is influenced by the number and/or diameter of the impingement apertures 44. Cooling air 120 flowing through the effusion apertures 96 in the heat shield 32 is subject to a cooling air second pressure drop between the second impingement cavity surface 86 and the combustion chamber surface 88. The magnitude of the second pressure drop is influenced by the number and/or diameter of the effusion apertures 96. In some embodiments, in the hybrid double wall system 116 the numbers and/or effective flow areas of the impingement and effusion apertures 44, 96 are selected such that a ratio of the first pressure drop to the second pressure drop is between about 1 to 1 (50:50) and about 1 to 2 (80:20). For example, if the liner has 3%P3 pressure loss, for an 80/20 split, the heat shield 32 would have 0.6% compressor discharge pressure loss across it and the impingement sheet would have the remainder 2.4%.

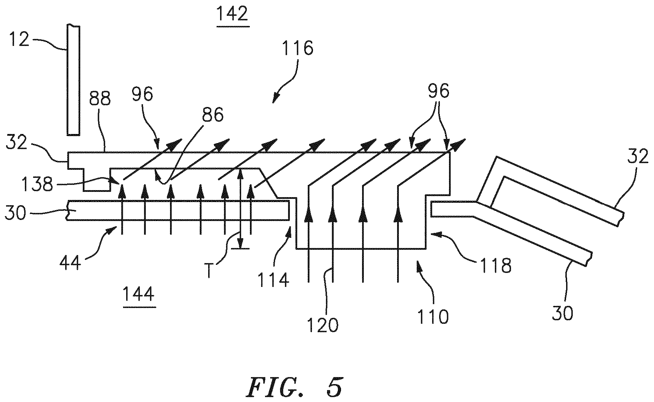

During operation of the combustor 10 of FIG. 1, fuel provided by the fuel injectors 26 is mixed with compressed gas within the combustion chamber 142, and the mixture is ignited. Due to varying flow and combustion temperatures within the combustion chamber 142, the first and/or second combustor walls 16 and 20 can be subject to axially and/or circumferentially varying combustion chamber 142 gas temperatures. Such varying temperatures and unwanted debris deposits can cause hot spots 112 as described above. The configuration of the shaped pad 110 along with the impingement and effusion apertures 44, 96 shown in FIGS. 4 and 5, however, can significantly reduce the damage caused by the hot spots 112 as well as mitigate debris and sand ingestion.

The thicker wall found in the location of the shaped pad 110 provides more heat shield wall material that has to be burned through.

The portion of the shaped pad 110 of the heat shield 32 is designed to take 100% of the liner pressure loss. With the shaped pad 110 taking 100% of the pressure loss, there is potential that the local hot spots 112 will not propagate to adjacent panels in the combustor 10. The shaped pad 110 will maintain the local cooling effectiveness, and prevent deterioration of the local cooling effectiveness.

The thicker material at the shaped pad 110 can enable more complex cooling passages and improve cooling effectiveness.

Implementation of the hybrid double wall 116 with strategic shaped pads 110 in the heat shield 32 can provide longer life for the heat shield 32. The longer life can be attained through slowing or stopping the panel burn-though cascading to the support shell 30 near the hot spots 112.

The shaped pads 110 cooling flow also makes the heat shield 32 insensitive to debris, sand, dirt and the like, plugging the cooling apertures 44, 96. The shaped pads 110 eliminate the impingement cavity 138 between the heat shield and the support shell where sand and debris can become entrained.

The implementation of the shaped pad 110 can allow for the utilization of a hybrid double wall or even a single wall design. This simplifies the hoop stress.

There has been provided a hybrid floatwall cooling feature.

## Claims

1. A turbine engine combustor (10) comprising a hybrid double wall (16, 20), said hybrid double wall (16, 20) comprising a heat shield (32) and a support shell (30), wherein:
the heat shield (32) is connected to the support shell (30) with a plurality of fasteners;
the heat shield (32) also has a shaped pad (110) extending through the support shell (30), said shaped pad (110) being selected from the group consisting of a triangle shape, a trapezoid shape, and a rectangle shape;
said shaped pad (110) is located at a hot spot (112) on said heat shield (32);
said shaped pad (110) comprises at least one effusion aperture (96) configured to conduct cooling fluid (120) across the thickness of said heat shield (32);
the support shell (30) comprises a plurality of shell quench apertures (42);
the heat shield (32) comprises a plurality of shield quench apertures (94); and
each of the shell quench apertures (42) is fluidly coupled to a respective one of the shield quench apertures (94) .

2. The turbine engine combustor (10) according to claim 1, wherein said shaped pad (110) is shaped similar to the shape of the hot spot (114).

3. The turbine engine combustor (10) according to any preceding claim, wherein the combustor support shell (30) comprises a plurality of impingement apertures (52, 54, 56, 44, 58, 60), the heat shield (32) comprises a plurality of effusion apertures (96) fluidly coupled with the plurality of impingement apertures (52...60) via an impingement cavity (138) between said combustor support shell (30) and said combustor heat shield (32), and said effusion apertures (96) formed in the shaped pad (110) are fluidly coupled from a combustor plenum (144) through the heat shield (32) and fluidly coupled to a combustion chamber (142).

4. The turbine engine combustor (10) according to claim 3, wherein said hybrid double wall (16, 20) is configured for a cooling fluid (120) to flow from said combustor plenum (144) through said impingement apertures (52...60) into said impingement cavity (138), and configured for said cooling fluid (120) to flow from said impingement cavity (138) through effusion apertures (96) of said heat shield (32) into said combustion chamber (142), and at least one effusion aperture (96) formed in the shaped pad (110) is fluidly coupled from said impingement cavity (138) through the heat shield (32) to the combustion chamber (142).

5. A process of protecting a turbine engine combustor heat shield (32) from hot spot degradation, said process comprising:
forming a shaped pad (110) in said heat shield (32), the shaped pad (110) being selected from the group consisting of a triangle shape, a trapezoid shape, and a rectangle shape;
locating said shaped pad (110) proximate said hot spot (112) on the heat shield (32);
forming at least one effusion aperture (96) in said shaped pad (110), said at least one effusion aperture (96) configured to conduct a cooling fluid (120) through said heat shield (32);
forming a support shell (30);
extending said shaped pad (110) through the support shell (30) of said combustor;
connecting the heat shield (32) to the support shell (30) with a plurality of fasteners;
forming at least one effusion aperture (96) in said shaped pad (110) the at least one effusion aperture (96) configured to conduct cooling fluid (120) across the thickness of said heat shield (32);
forming a plurality of shell quench apertures (42) in the support shell (30);
forming a plurality of shield quench apertures (94) in the heat shield (32), wherein each of the shell quench apertures (42) is fluidly coupled to a respective one of the shield quench apertures (94).

6. The process of claim 5, wherein the combustor support shell (30) comprises a plurality of impingement apertures (52, 54, 56, 44, 58, 60), the process further comprising:
fluidly coupling the effusion apertures (96) with the plurality of impingement apertures (52...60) via an impingement cavity (138) between said combustor support shell (30) and said combustor heat shield (32); and
fluidly coupling a combustor plenum (144) with a combustion chamber (142) by flowing said cooling fluid (120) through said at least one effusion aperture (96) formed in the shaped pad (110).

7. The process of claim 6, further comprising:
flowing said cooling fluid (120) from said combustor plenum (144) through said impingement apertures (52...60) into said impingement cavity (138), and flowing said cooling fluid (120) from said impingement cavity (138) through said additional effusion apertures (96) of said heat shield (32) into said combustion chamber (142); and
flowing said cooling fluid (120) from said impingement cavity (138) through said at least one effusion aperture (96) formed in the shaped pad (110) of the heat shield (32) to said combustion chamber (142).

## Patentansprüche

1. Turbinentriebwerks-Brennkammer (10) umfassend eine hybride Doppelwand (16, 20), wobei die hybride Doppelwand (16, 20) einen Hitzeschild (32) und eine Stützschale (30) umfasst, wobei:
der Hitzeschild (32) mit einer Vielzahl von Befestigungselementen an die Stützschale (30) verbunden ist;
der Hitzeschild (32) auch ein geformtes Kissen (110) aufweist, das sich durch die Stützschale (30) erstreckt, wobei das geformte Kissen (110) aus der Gruppe ausgewählt ist, die aus einer Dreiecksform, einer Trapezform und einer Rechteckform besteht;
sich das geformte Kissen (110) an einer heißen Stelle (112) auf dem Hitzeschild (32) befindet;
das geformte Kissen (110) mindestens eine Effusionsöffnung (96) umfasst, die dazu konfiguriert ist, Kühlfluid (120) über die Dicke des Hitzeschilds (32) zu leiten;
die Stützschale (30) eine Vielzahl von Schalen-Löschöffnungen (42) umfasst;
der Hitzeschild (32) eine Vielzahl von Schild-Löschöffnungen (94) umfasst; und
jede der Schalen-Löschöffnungen (42) fluidisch mit einer entsprechenden einen der Schild-Löschöffnungen (94) gekoppelt ist.

2. Turbinentriebwerks-Brennkammer (10) nach Anspruch 1, wobei das geformte Kissen (110) ähnlich wie die Form der heißen Stelle (114) geformt ist.

3. Turbinentriebwerks-Brennkammer (10) nach einem der vorhergehenden Ansprüche, wobei die Brennkammer-Stützschale (30) eine Vielzahl von Aufprallöffnungen (52, 54, 56, 44, 58, 60) umfasst, der Hitzeschild (32) eine Vielzahl von Effusionsöffnungen (96) umfasst, die über einen Aufprallhohlraum (138) zwischen der Brennkammer-Stützschale (30) und dem Brennkammer-Hitzeschild (32) fluidisch mit der Vielzahl von Aufprallöffnungen (52... 60) gekoppelt ist, und die in dem geformten Kissen (110) ausgebildeten Effusionsöffnungen (96) von einem Brennkammer-Plenum (144) durch den Hitzeschild (32) fluidisch gekoppelt sind und fluidisch mit einer Verbrennungskammer (142) gekoppelt sind.

4. Turbinentriebwerks-Brennkammer (10) nach Anspruch 3, wobei die hybride Doppelwand (16, 20) dafür konfiguriert ist, dass ein Kühlfluid (120) von dem Brennkammer-Plenum (144) durch die Aufprall-Öffnungen (52... 60) in den Aufprallhohlraum (138) strömt, und dafür konfiguriert ist, dass das Kühlfluid (120) von dem Aufprallhohlraum (138) durch Effusionsöffnungen (96) des Hitzeschilds (32) in die Verbrennungskammer (142) strömt, und mindestens eine in dem geformten Kissen (110) ausgebildete Effusionsöffnung (96) von dem Aufprallhohlraum (138) durch den Hitzeschild (32) fluidisch mit der Verbrennungskammer (142) gekoppelt ist.

5. Prozess zum Schützen eines Brennkammer-Hitzeschildes (32) eines Turbinentriebwerks vor einer Verschlechterung der heißen Stellen, wobei der Prozess umfasst:
Ausbilden eines geformten Kissens (110) in dem Hitzeschild (32), wobei das geformte Kissen (110) aus der Gruppe ausgewählt ist, die aus einer Dreiecksform, einer Trapezform und einer Rechteckform besteht;
Anordnen des geformten Kissens (110) in der Nähe der heißen Stelle (112) auf dem Hitzeschild (32);
Ausbilden mindestens einer Effusionsöffnung (96) in dem geformten Kissen (110), wobei die mindestens eine Effusionsöffnung (96) dazu konfiguriert ist, ein Kühlfluid (120) durch den Hitzeschild (32) zu leiten;
Ausbilden einer Stützschale (30);
Strecken des geformten Kissens (110) durch die Stützschale (30) der Brennkammer;
Verbinden des Hitzeschilds (32) an die Stützschale (30) mit einer Vielzahl von Befestigungselementen;
Ausbilden mindestens einer Effusionsöffnung (96) in dem geformten Kissen (110), wobei die mindestens eine Effusionsöffnung (96) dazu konfiguriert ist, Kühlfluid (120) über die Dicke des Hitzeschilds (32) zu leiten;
Ausbilden einer Vielzahl von Schalen-Löschöffnungen (42) in der Stützschale (30);
Ausbilden einer Vielzahl von Schild-Löschöffnungen (94) in dem Hitzeschild (32), wobei jede der Schalen-Löschöffnungen (42) fluidisch mit einer entsprechenden einen der Schild-Löschöffnungen (94) verbunden ist.

6. Prozess nach Anspruch 5, wobei die Brennkammer-Stützschale (30) eine Vielzahl von Aufprallöffnungen (52, 54, 56, 44, 58, 60) umfasst, wobei der Prozess ferner Folgendes umfasst:
fluidisches Verbinden der Effusionsöffnungen (96) mit der Vielzahl von Aufprallöffnungen (52...60) über einen Aufprallhohlraum (138) zwischen der Brennkammer-Stützschale (30) und dem Brennkammer-Hitzeschild (32); und
fluidisches Verbinden eines Brennkammer-Plenums (144) mit einer Verbrennungskammer (142) durch Strömen des Kühlfluids (120) durch die mindestens eine in dem geformten Kissen (110) ausgebildete Effusionsöffnung (96).

7. Prozess nach Anspruch 6, ferner umfassend:
Leiten des Kühlfluids (120) von dem Brennkammer-Plenum (144) durch die Aufprallöffnungen (52...60) in den Aufprallhohlraum (138) und Leiten des Kühlfluids (120) von dem Aufprallhohlraum (138) durch die zusätzlichen Effusionsöffnungen (96) des Hitzeschilds (32) in die Verbrennungskammer (142); und
Leiten des Kühlfluids (120) von dem Aufprallhohlraum (138) durch die mindestens eine in dem geformten Kissen (110) des Hitzeschilds (32) ausgebildete Ausflussöffnung (96) zu der Verbrennungskammer (142).

## Revendications

1. Chambre de combustion de moteur à turbine (10) comprenant une double paroi hybride (16, 20), ladite double paroi hybride (16, 20) comprenant un écran thermique (32) et une coque de support (30), dans laquelle :
l'écran thermique (32) est relié à la coque de support (30) avec une pluralité de fixations ;
l'écran thermique (32) comporte également un coussin profilé (110) s'étendant à travers la coque de support (30), ledit coussin profilé (110) étant sélectionné dans le groupe constitué d'une forme triangulaire, d'une forme trapézoïdale et d'une forme rectangulaire ;
ledit coussin profilé (110) est situé à un point chaud (112) sur ledit écran thermique (32) ;
ledit coussin profilé (110) comprend au moins une ouverture d'effusion (96) configurée pour conduire le fluide de refroidissement (120) à travers l'épaisseur dudit écran thermique (32) ;
la coque de support (30) comprend une pluralité d'ouvertures de trempe de coque (42) ;
l'écran thermique (32) comprend une pluralité d'ouvertures de trempe d'écran (94) ; et
chacune des ouvertures de trempe de coque (42) est couplée fluidiquement à l'une respective des ouvertures de trempe d'écran (94).

2. Chambre de combustion de moteur à turbine (10) selon la revendication 1, dans laquelle ledit coussin profilé (110) a une forme similaire à la forme du point chaud (114).

3. Chambre de combustion de moteur à turbine (10) selon une quelconque revendication précédente, dans laquelle la coque de support de chambre de combustion (30) comprend une pluralité d'ouvertures d'impact (52, 54, 56, 44, 58, 60), l'écran thermique (32) comprend une pluralité d'ouvertures d'effusion (96) couplées fluidiquement à la pluralité d'ouvertures d'impact (52...60) via une cavité d'impact (138) entre ladite coque de support de chambre de combustion (30) et ledit écran thermique de chambre de combustion (32), et lesdites ouvertures d'effusion (96) formées dans le coussin profilé (110) sont couplés fluidiquement à partir d'un plénum de chambre de combustion (144) à travers l'écran thermique (32) et couplés fluidiquement à une chambre de combustion (142).

4. Chambre de combustion de moteur à turbine (10) selon la revendication 3, dans laquelle ladite double paroi hybride (16, 20) est configurée pour qu'un fluide de refroidissement (120) s'écoule depuis ledit plénum de chambre de combustion (144) à travers lesdites ouvertures d'impact (52...60) dans ladite cavité d'impact (138), et configuré pour que ledit fluide de refroidissement (120) s'écoule depuis ladite cavité d'impact (138) à travers les ouvertures d'effusion (96) dudit écran thermique (32) dans ladite chambre de combustion (142), et au moins une ouverture d'effusion (96) formée dans le coussin profilé (110) est couplée fluidiquement de ladite cavité d'impact (138) à la chambre de combustion (142), via l'écran thermique (32).

5. Procédé de protection d'un écran thermique de chambre de combustion de moteur à turbine (32) contre la dégradation des points chauds, ledit procédé comprenant :
la formation d'un coussin profilé (110) dans ledit écran thermique (32), le coussin profilé (110) étant sélectionné dans le groupe constitué d'une forme triangulaire, d'une forme trapézoïdale et d'une forme rectangulaire ;
le positionnement dudit coussin profilé (110) à proximité dudit point chaud (112) sur l'écran thermique (32) ;
la formation d'au moins une ouverture d'effusion (96) dans ledit coussin profilé (110), ladite au moins une ouverture d'effusion (96) étant configurée pour conduire un fluide de refroidissement (120) à travers ledit écran thermique (32) ;
la formation d'une coque de support (30) ;
l'extension dudit coussin profilé (110) à travers la coque de support (30) de ladite chambre de combustion ;
la connexion de l'écran thermique (32) à la coque de support (30) avec une pluralité de fixations ;
la formation d'au moins une ouverture d'effusion (96) dans ledit coussin profilé (110), l'au moins une ouverture d'effusion (96) étant configurée pour conduire le fluide de refroidissement (120) à travers l'épaisseur dudit écran thermique (32) ;
la formation d'une pluralité d'ouvertures de trempe de coque (42) dans la coque de support (30) ;
la formation d'une pluralité d'ouvertures de trempe d'écran (94) dans l'écran thermique (32), dans lequel chacune des ouvertures de trempe de coque (42) est couplée fluidiquement à l'une respective des ouvertures de trempe d'écran (94).

6. Procédé selon la revendication 5, dans lequel la coque de support de chambre de combustion (30) comprend une pluralité d'ouvertures d'impact (52, 54, 56, 44, 58, 60), le procédé comprenant en outre :
le couplage fluidique des ouvertures d'effusion (96) avec la pluralité d'ouvertures d'impact (52...60) via une cavité d'impact (138) entre ladite coque de support de chambre de combustion (30) et ledit écran thermique de chambre de combustion (32) ; et
le couplage fluidique d'un plénum de chambre de combustion (144) avec une chambre de combustion (142) en faisant circuler ledit fluide de refroidissement (120) à travers ladite au moins une ouverture d'effusion (96) formée dans le coussin profilé (110).

7. Procédé selon la revendication 6, comprenant en outre :
l'écoulement dudit fluide de refroidissement (120) depuis ledit plénum de chambre de combustion (144) à travers lesdites ouvertures d'impact (52...60) dans ladite cavité d'impact (138), et l'écoulement dudit fluide de refroidissement (120) depuis ladite cavité d'impact (138) à travers lesdites ouvertures d'effusion (96) supplémentaires dudit écran thermique (32) dans ladite chambre de combustion (142) ; et
l'écoulement dudit fluide de refroidissement (120) depuis ladite cavité d'impact (138) à travers ladite au moins une ouverture d'effusion (96) formée dans le coussin profilé (110) de l'écran thermique (32) à ladite chambre de combustion (142).
